# EUROPEAN PATENT APPLICATION

(11) **EP 3 677 119 A1**
(43) Date of publication of application: **08.07.2020**
(21) Application number: 18918056.5
(22) Date of filing: 25.07.2018
(51) Int. Cl.: A01N 25/04

(54) **HERBICIDE FORMULATION IN THE FORM OF A MICROEMULSION**

(30) Priority: 10.05.2018 AR P180101219
(71) Applicant: Red Surcos Colombia Ltda., Bogotá (CO)
(72) Inventor: BLUMEL, Edmundo, Berazategui Buenos Aires (AR)
(74) Representative: Monzón de la Flor, Luis Miguel
(86) International application number: PCT/IB2018/055573
(87) International publication number: WO 2019/215483

(57) **Abstract**

Herbicidal formulation in the form of microemulsion, which has a greater agronomic efficiency, allows a lower use of active substance with a lower environmental impact, the active substance being in its acid form and not being it necessary to chemically modify it for being solubilized in the water of the application broth, having synergies of effectiveness in tank mixtures with other active ingredients. The active substance comprises Glyphosate, Imazapir, Imazapic, Picloram, and mixtures of active substances consisting of Glyphosate and 2,4-dichlorophenoxyacetic acid, Glyphosate and Dicamba, and Picloram and 2,4-Dichlorophenoxyacetic Acid, said active ingredients being dissolved in an adjuvant having a characteristic design generated by a particular combination of surfactants and solvents. Tank mixtures of products formulated with the design adjuvant for the active ingredients Imazapir and Imazapic on the one hand, and Picloram and 2,4-D on the other hand, are also included within the scope of the invention.

## Description

### STATE OF THE ART OF THE INVENTION

### Field of the Invention

The present invention relates to the field of products and active ingredients for application in pest control, preferably for application in agriculture, and more specifically relates to water-soluble herbicidal formulations, which include as active ingredients Glyphosate, Imazapir, Imazapic, Picloram, and mixtures of active substances consisting of Glyphosate and 2,4-Dichlorophenoxyacetic Acid; Glyphosate and Dicamba; Picloram and 2,4-Dichlorophenoxyacetic Acid, all in its acid form, and design adjuvants that allow obtaining a product with important advantages from the point of view of agronomic efficacy.

### Description of the prior art

The active substances Glyphosate, Imazapir, Imazapic and Picloram, as well as mixtures consisting of Glyphosate and 2,4-Dichlorophenoxyacetic acid, Glyphosate and Dicamba, and Picloram and 2,4-Dichlorophenoxyacetic acid, are active ingredients widely disclosed in the agriculture field.

For example, glyphosate is one of the most commonly used agrochemicals, it is applied by spraying by means of different types of machines for which and generally it is usually dissolved in the water of the spray broth. However, glyphosate in its acid form has very low water solubility, so it is usually salified so that it can be dissolved in the water of the spray broth. Traditional glyphosate formulations, either in liquid or solid form, are salts, for example, of amines/ammonium, potassium, etc., so that the product is soluble both in its commercial presentation (in the case of water-based liquid formulations), and in the spray broth (in the case of solid and liquid presentations). However, even when the glyphosate in the form of salt can be dissolved without difficulty, an important part of the herbicidal effectiveness of this active ingredient is sacrificed in this salification. It was found that acid formulations that can somehow be "solubilized" in water, markedly improve herbicidal effectiveness, due to their greater bioavailability and bioefficacy, so that the salified forms of glyphosate cannot compete, with benefits of acid forms.

Similar considerations apply to the acid forms of the rest of the active ingredients, that is, Imazapir, Imazapic, Picloram, as well as when formulated in the form of mixtures. In particular, the present formulations with improved agronomic properties comprise:
Glyphosate and 2,4-Dichlorophenoxyacetic Acid
Glyphosate and Dicamba
Picloram and 2,4-Dichlorophenoxyacetic Acid.

Numerous documents are known that describe glyphosate as the main active component in herbicidal formulations. For example, WO 91/08666 describes formulations containing Glyphosate in conjunction with an active surface agent.

WO 2011/057361 discloses formulations of glyphosate with phosphoric acid and non-amphiphilic cations that improve its effectiveness. The pH of these compositions is basic.

Also, WO 02/11536 discloses an herbicidal formulation comprising phosphoric and phosphorous acids, to dissolve acid glyphosate. Glyphosate formulations thus solubilized have shown a significant improvement in the effectiveness of said glyphosate.

WO 03/026429 discloses compositions of acid glyphosate particles suspended in water and a surfactant, selected from a cationic, anionic surfactant and mixtures thereof. Said document discloses that said acid composition of glyphosate remains stable, and is minimally affected - or even unaffected - by hard waters. In short, it is described that this formulation is less susceptible to deactivation due to the presence of hard water.

Also, numerous prior art documents describe formulations containing active ingredients used in combination.

US 6,803,345 is primarily directed to concentrates useful for preparing microemulsions of different active ingredients - anong which 2,4-D and Dicamba are included-, which include water and organic solvents. Said document proposes to improve diverse properties in the application and use of the described concentrates, proposing among its main objectives the fact of being able to minimize the use of organic solvents, even being able to avoid their use.

US 7,094,735 also discloses obtaining a variety of herbicidal microemulsions, which include, among others, glyphosate and Dicamba. This document discloses the use of organic and inorganic acids as acidifying agents. On the other hand, reference is made to the fact that with the stability of the microemulsions of the document, both in commercial presentations as well as in spray broths, recrystallization of products may occur, especially when the doses are high.

US 6,207,617 refers to concentrated compositions for the treatment of plants that include among other possible active components, imazapic and imazapir in their acidic forms, and they also include a surfactant. In said document the composition of the concentrate is taken from a discontinuous phase to a continuous phase.

US 5,703,012 discloses herbicidal compositions that among other active substances include picloram and 2,4-D formulated in fatty acids or in a mixture of fatty acids, which allow it to obtain a synergistic effect in the application of said composition.

EP 2 421 372 discloses herbicidal formulations of glyphosate and 2,4-D salts. Such compounds are in the form of amine salts, thus achieving that the herbicidal concentrate has homogeneity and stability properties.

US 9,433,208 discloses concentrates of amine adjuvants used in microemulsions of various active substances, including among several others, picloram. The adjuvant concentrate is composed of ethoxylated amine surfactants, a phosphate ester component, and a dearomatized hydrocarbon component. The main purpose of this formulation is to increase the effectiveness of the active component.

### Brief description of the invention

It is therefore an object of the present invention to provide a composition of active ingredients formulated as microemulsions in their acid form that has a number of advantages over prior art documents.

The advantages of the formulations of the present invention can be summarized as follows:
- The active ingredients are in acid form in the formulation,
- The formulations are microemulsions,
- An improved behavior of the acid form and microemulsion in the spray broth is verified,
- They do not require the addition of adjuvants to the spray broth, since it contains them within its formula, and provides them in a precise and necessary way to the broth,
- There is a greater bioavailability and bioefficacy, because physical and chemical losses in the formation of the broth are minimized, during and after spraying,
- A enhancement, synergism and physical-chemical compatibility is verified in tank mixtures with other formulations due to the design adjuvant of the invention
- Little or no incidence of quality of water used,
- The active substances can be used without modifying their original structure (for example they do not require salifications, esterifications, etc.),
- The adjuvant acts in the formula at the same time as a solvent,
- There is a lower environmental impact due to a lower dose/use per hectare of the active ingredient, generating less residues in crops,
- They allow the application of the product with a smaller volume of water, with respect to the one needed when other formulations are used.

It is also an object of the present invention to provide adjuvants, that when their components (surfactants and solvents) are combined in the appropriate amounts, give the formulation the desired properties. More specifically, adjuvants comprise:

| | |
|---|---|
| Soybean oil amino amide | 10-40% |
| Ethoxylated coconut fatty amine | 5- 15% |
| Methyl ester of fatty acids (Biodiesel) | 4- 15% |
| Cyclohexanone | 2- 21% |
| N-methyl pyrrolidone | 2- 40% |
| Ethoxylated fatty alcohols | 2- 12% |
| Water | 5- 40% |

With the use of at least four (4) of the above components, formulations with improved properties (acid microemulsions with the necessary amount of adjuvant, being compatible and enhancers in tank mixtures with other agrochemicals) are achieved. On the other hand, the mentioned adjuvants, act at the same time as surfactants and solvents of the active ingredients in the formulas in question.

The surfactant/solvent also comprises ethoxylated fatty alcohols when the active ingredient is selected from Imazapir, Imazapic and Picloram.

At least one acidulant that is glacial acetic acid may be included in the formulation when the active ingredient is selected from Imazapir, Imazapic, Picloram and the mixture of Picloram and 2,4-Dichlorophenoxyacetic.

The percentages indicated above are expressed in % w/V with respect to the total formulation.

### Detailed description of the invention

Referring now in detail to the formulations of the invention, it should be noted first that, with their application, it is possible to improve the effectiveness of the active ingredients, decrease the environmental impact caused by the agrochemicals used, and a suitable use of adjuvants is also achieved. The other active ingredients involved in the tank mixture are further enhanced.

The herbicidal formulation of the invention comprises at least one active ingredient selected among:
Glyphosate at a concentration of between 5-15% w/V, Imazapir at a concentration of between 5-30 % w/V, Imazapic at a concentration of between 5-30 % w/V, Picloram at a concentration of between 2-10 % w/V,
and mixtures of active substances consisting of the following:
between 5-15 % w/V of Glyphosate and 2-10 % w/V of 2,4-Dichlorophenoxyacetic Acid,
between 5-15 % w/V of Glyphosate and 2-10 % w/V of Dicamba,
between 2-10 % w/V of Picloram and 5-20 % w/V of 2,4-Dichlorophenoxyacetic Acid,
and at least four (4) of the following surfactants/solvents to generate a suitable adjuvant:

| | |
|---|---|
| Soybean oil amino amide | 10-40% |
| Ethoxylated coconut fatty amine | 5- 15% |
| Methyl ester of fatty acids (Biodiesel) | 4- 15% |
| Cyclohexanone | 2- 21% |
| N-methyl pyrrolidone | 2- 40% |
| Ethoxylated fatty alcohols | 2- 12% |
| Water | 5- 40%, |

the adjuvant comprising ethoxylated fatty alcohols when the active ingredient is selected from said Imazapir, Imazapic and Picloram, and at least one acidulant that is glacial acetic acid when the active ingredient is selected from Glyphosate, Imazapir, Imazapic, Picloram, the mixture of Glyphosate and Dicamba, and the mixture of Picloram and 2,4-Dichlorophenoxyacetic.

All percentages are expressed in% w/V with respect to the total formulation.

The particular combination/composition of solvents/surfactants and acidulants to achieve the appropriate adjuvant allows greater agronomic efficiency since it works in the form of microemulsion, which allows a lower use of active substance per hectare, thus generating less environmental impact and residues in crops. The active substance is found in all cases, in its acid form and therefore, it is not necessary to chemically modify it in order to solubilize it in the water of broth being applied. In addition, the formulation of the invention has synergies of effectiveness in tank mixtures with other active ingredients that can be hypothetically found in the mixture. Such active ingredients include at least all pre and post-emergent herbicides that currently exist in the market.

The existence of an important synergism in the formulation containing Imazapic in conjunction with Imazapir is verified. Indeed, the formulation with Imazapic in microemulsion itself improves effectiveness by 15%, when compared to the equivalent commercial product. At the same time, the formulation with Imazapir in microemulsion alone improves its effectiveness by 25% when compared to the equivalent commercial product. However, it was found that when both active ingredients are used in the same formulation with the appropriate surfactants/solvents, they are enhanced and reduce the dose up to 50% when compared to that same commercial product mixture.

In turn, the existence of an important synergism in the formulation containing Picloram in conjunction with 2,4-D is verified. In effect, the formulation of Picloram in microemulsion itself improves effectiveness by 15%, when compared to the equivalent commercial product. However, it was found that when both active ingredients are used in the same formulation with the appropriate surfactants/solvents, they are enhanced and the dose is reduced up to 20% when compared to that same commercial product mixture.

The physicochemical features of each of the adjuvants used are described below.
1) Soybean oil amino amine (98% soybean oil amide):
   Physical state: liquid above 20°C, below this temperature it is a waxy amber solid
   Smell: typical of amines
   Color: amber to dark caramel
   PH value: 11.7-12.9 at 20°C
   Melting Point: 20°C
   Flammability: not flammable
   Density: 0.90 g/cm3 (20°C)
   Solubility in water: it emulsifies
   Free amines <4 meq/g
   Refractive index = 1.472
2) Ethoxylated coconut fatty amine (from 15 moles of ethylene oxide):
   Physical state: liquid above 25°C
   pH: alkaline
   Amine Value: 55-75
   HLB: 15.43
   Maximum humidity <1%
3) Methyl esters of soy fatty acids (Biodiesel):
   Boiling point: Above 204°C at 760 mm Hg
   Melting point: -1°C
   Vapor pressure: less than 1mm Hg at 72°C
   Relative density: 0.88 at 15°C
   Solubility in water: negligible at room temperature
   Odor and appearance: yellow-orange liquid at room temperature. Slight frying oil smell.
   Flash Point:> 150°C (ISO 3679)
4) N-Methylpyrrolidone:
   Physical state: liquid
   Color: colorless, clear
   Odor: slight own smell
   pH value: 8.5 - 10
   Melting point: -23.6°C
   Boiling Point: 204.3°C
   Flash point: 91°C (DIN 51758)
   Lower explosion limit: 1.3% (V)
   Upper explosion limit: 9.5% (V
   Ignition temperature: 245°C (DIN 51794)
   Vapor pressure: 0.32 mBar (20°C)
   Density: 1.028 g/cm3 (25°C) (DIN 51757)
   Water solubility: miscible
   Solubility (qualitative) solvent(s): organic solvents: Miscible
   N-octanol/water partition coefficient (log Pow): -0.46
   Surface tension: 0.41 mN/m
   Dynamic viscosity: 1.796 mPa.s (20°C)
   Molar mass: 99.00 g/mol
5) Cyclohexanone:
   Appearance: clear, colorless liquid
   Physical state: liquid
   Smell: Mint
   pH: Indeterminate
   Vapor pressure: 136 mm @ 100°C
   Vapor density (air = 1): 3.4
   Boiling point: 155.6°C (312.1°F)
   Flash point: 44°C (111°F)
   Spontaneous ignition temperature: 420°C (788°F)
   Lower explosion limit: 1.1%
   Upper Explosive Concentration Limit: 8.1%
   Specific Gravity (water = 1): 0.948
   Volatile organic compound content: 100%
   Water solubility: slightly soluble
   Solubility in other media: soluble in most organic solvents
6) Ethoxylated fatty alcohols with 6 moles of EO (ethoxylated isotridecyl alcohol methyl ether with 6 moles of ethylene oxide)
   Appearance: liquid
   Color: opalescent white
   pH: 6-8 (50 g/l in a 1: 1 ethanol-water mixture
   Flash point: 170°C
   Density: 0.96 g/cm3(50°C)
   Decomposition temperature: > 300°C
   Solubility in water at 20°C: soluble
   Viscosity: 70 mPa.s at 20°C
   HLB: 11
   Maximum water content: 0.5%

The formulations of the invention in the form of a microemulsion contain the appropriate and necessary adjuvant loading incorporated therein when the products are applied to the field, therefore it is not necessary to carry out subsequent operations for the addition of additional substances to the spray broth to avoid physical-chemical incompatibilities among components and/or improve the performance of the formulations used in a broth with certain qualitative and quantitative features.

In addition, the formulations of the invention have the quality of protecting the products from physical and chemical losses by photolysis, hydrolysis, incompatibilities in tank mixtures, and prevent spray droplets from being lost by volatilization, drift, bounce, rolled, fragmentation or adhesion, in addition to its inherent greater penetration because it is in the form of microemulsion.

The sum of the above factors allows drastic reductions in active ingredient dose per hectare.

The advantages listed allow applications to be made without having to add additives to the spray broth and, at the same time, allow that the spray broth be stable against any quality of water used. The high load of adjuvant also allows enhancing the performance improvement of the other products of the broth in tank mixtures.

The active ingredients of these formulations can be used without modifying their chemical structure, since they are soluble in the design adjuvant and in turn the formula obtained is soluble in water, even in its acid forms (for example 2,4-dichlorophenoxyacetic, dicamba, picloram, glyphosate, etc.), so it is not necessary to salify them in order to make them subsequently soluble in water.

The formulations of the invention are an important tool in improving the bioavailability and bioefficacy of known active ingredients - such as those specifically included within the scope of the invention - and constitute a tool to reduce the impact that agrochemicals generate in environment.

It is also explained in what context the following expressions should be interpreted from now on:
Co-formulated: those products that contain more than one active ingredient in their formulation,
Tank mix: it is the one that is produced due to the incorporation of 2 or more formulated products to the tank of the applicator equipment.

Preferred formulations according to the invention are listed below, in which the active ingredients are in the form of microemulsion:
**1) 20% w/V of Imazapir in acid form,**
   19% w/V of soybean oil amino amide,
   7.0% w/V of Biodiesel,
   33.0% w/V of N-methyl pyrrolidone,
   11.0% w/V of ethoxylated fatty alcohol with 6 moles of EO,
   8.0% w/V of glacial acetic acid, y
   8.0 % w/V of water.
**2) 5% w/V of Picloram in acid form,**
   26% w/V of soybean oil amino amide,
   15.0% w/V of Biodiesel,
   28.0% w/V of N-methyl pyrrolidone,
   9.0% w/V of ethoxylated fatty alcohol with 6 moles of EO,
   13.0% w/V of glacial acetic acid, and
   4.0% w/V of water.
**3) 11% w/V of Glyphosate in acid form,**
   21% w/V of cyclohexanone,
   19% w/V of soybean oil amino amide,
   14.0% w/V of ethoxylated coconut amine with 15 moles of EO,
   4.5% w/V of Biodiesel, and
   32.5% w/V of water.
**4) 11% w/V of Glyphosate in acid form,**
   **8% w/V of 2,4-dichlorophenoxyacetic acid in acid form,**
   21% w/V of cyclohexanone,
   21.0% w/V of soybean oil amino amide,
   16.0% w/V of ethoxylated coconut fatty amine with 15 moles of EO, and
   38.0% w/V of water.
**5) 20% w/V of Imazapic in acid form,**
   20% w/V of soybean oil amino amide,
   7.0% w/V of Biodiesel,
   36.0% w/V of N-methyl pyrrolidone,
   12.0% w/V of ethoxylated fatty alcohol with 6 moles of EO,
   8.0% w/V of glacial acetic acid, and
   2.5% w/V of water.
**6) 15.0** % **w/V of 2,4-dichlorophenoxyacetic acid in acid form,**
   **5.0% w/V of Picloram in acid form,**
   8.0% w/V of cyclohexanone,
   30.0% w/V of soybean oil amino amide,
   12.0% w/V of ethoxylated coconut amine with 15 moles of EO,
   7.0% w/V of Biodiesel,
   4.0% w/V of glacial acetic acid, y
   26.0% w/V of water.
**7) 12.0% w/V of Glyphosate in acid form,**
   **2.5% w/V of Dicamba in acid form,**
   16% w/V of cyclohexanone,
   24.0% w/V of soybean oil amino amide,
   17.5% w/V of ethoxylated coconut amine with 15 moles of EO, y
   35.5% w/V of water.
**8) Acid Imazapir 20% w/V in microemulsion in tank mix with acid Imazapic 20% w/V in microemulsion.**
**9) Acid Picloram 5% w/V in microemulsion in tank mix with acid 2,4-D 30% w/V in microemulsion.**

The manner in which formulations 1) to 7) have been prepared is described below. While the critical operational steps and conditions for the preparation of such formulations will be described below, it should be admitted that it is possible to apply reasonable generalization with other active substances that could also be used therein as additional components.

### Formulation example 1

1. General characterization of the process: The formulation process was carried out by batch or lots.
   - The theoretical amount of the solvent N-methylpyrrolidone was loaded into the stirring tank.
   - Under stirring, the total theoretical amount of soybean oil amino amide was loaded and stirred until complete dissolution and until obtaining a crystalline solution.
   - Under stirring, all the water indicated in the formula was added.
   - Under stirring, the total theoretical amount of the acetic acid glacial acidulant was loaded.
   - Under stirring, the total theoretical amount of Imazapir Technical Grade was loaded and stirred until complete dissolution and until obtaining a crystalline solution.
   - Under stirring, the total theoretical amount of fatty acid methyl esters was loaded and mixed until homogeneity was achieved.
   - Under stirring, the total theoretical amount of ethoxylated fatty alcohol with 6 moles of EO was loaded and mixed until homogeneity was achieved.
   - It was filtered and the product was checked for quality control, which once approved was released for packaging.
2. Description of used equipment:
   The following pieces of equipment built with stainless steel were used:
   Mixing tank
   Centrifugal pump
   Finished product storage tank
   Packing machines
3. Description of the conditions that were controlled during the process:
   - Dissolution temperature, which should not exceed 30°C,
   - Final density of the mixture, which must be within the adjustment parameters,
   - Viscosity of the microemulsion, which must be within the adjustment parameters,
   - Other parameters related to the product quality specifications.
4. It was checked that there were no reactions after the formulation process between the active ingredients, or between these and any other ingredient of the formulation or the container, as well as no process of migration of materials from the container and the product.

### Formulation example 2

1. General characterization of the process: The formulation process was carried out by batch or lots.
   - The theoretical amount of the solvent N-methylpyrrolidone was loaded into the stirring tank.
   - Under stirring, the total theoretical amount of soybean oil amino amide was loaded, and stirred until complete dissolution and until obtaining a crystalline solution.
   - Under stirring, all the water indicated in the formula was added.
   - Under stirring, the total theoretical amount of the acetic acid glacial acidulant was loaded.
   - Under stirring, the total theoretical amount of Picloram Technical Grade was loaded and stirred until complete dissolution and until obtaining a crystalline solution.
   - Under stirring, the total theoretical amount of fatty acid methyl esters was loaded and mixed until homogeneity was achieved.
   - Under stirring, the total theoretical amount of ethoxylated fatty alcohol with 6 moles of EO was loaded and mixed until homogeneity was achieved.
   - It was filtered and the product was checked for quality control, which once approved was released for packaging.
2. Description of used equipment:
   The following pieces of equipment were used:
   Stainless steel stirring tank
   Stainless steel accumulation tank
   Loading pumps for solvents and emulsifiers
3. Description of the conditions that were controlled during the process:
   - Dissolution temperature, which should not exceed 30°C.
   - Final density of the mixture, which must be within the adjustment parameters.
   - Viscosity of the microemulsion that must be within the adjustment parameters.
   - Other parameters related to the product quality specifications.
4. There were no reactions subsequent to the formulation process between the active ingredients, or between these and any other ingredient of the formulation or the container, as well as no process of migration of materials from the container and the product.

### Formulation example 3

1. General characterization of the process: The formulation process was carried out by batch or lots.
   - The theoretical amount of cyclohexanone solvent was loaded to the stirring tank.
   - Under stirring, the total theoretical amount of ethoxylated coconut amine with 15 moles of EO was loaded and stirred until complete dissolution and until obtaining a crystalline solution.
   - Under stirring, the total theoretical amount of soybean oil amino amide was loaded and stirred until complete dissolution and until obtaining a crystalline solution.
   - Under stirring, all the water indicated in the formula was added.
   - Under stirring, the total theoretical amount of Glyphosate Technical Grade was loaded and was stirred until complete dissolution and until obtaining a crystalline solution.
   - Under stirring, the total theoretical amount of fatty acid methyl esters was loaded and mixed until homogeneity
   - It was filtered and the product was checked for quality control, which once approved was released for packaging.
2. Description of used equipment:
   The following pieces of equipment built with stainless steel were used:
   Mixing tank.
   Centrifugal pump
   Finished product storage tank
   Packing machines
3. Description of the conditions that were controlled during the process:
   - Dissolution temperature, which should not exceed 30°C.
   - Final density of the mixture, which must be within the adjustment parameters.
   - Viscosity of the microemulsion, which must be within the adjustment parameters.
   - Other parameters related to product quality specifications.
4. There were no reactions subsequent to the formulation process between the active ingredients, or between these and any other ingredient of the formulation or the container, as well as no process of migration of materials from the container and the product.

### Formulation example 4

1. General characterization of the process: The formulation process was carried out by batch or lots.
   - The theoretical amount of cyclohexanone solvent was loaded to the stirring tank.
   - Under stirring, the total theoretical amount of ethoxylated coconut amine with 15 moles of EO was loaded and was stirred until complete dissolution and until obtaining a crystalline solution.
   - Under stirring, the total theoretical amount of soybean oil amino amide was loaded, and stirred until complete dissolution and until obtaining a crystalline solution.
   - Under stirring, all the water indicated in the formula was added.
   - Under stirring, the total theoretical amount of Glyphosate Technical Grade was loaded and 2,4-D Technical Grade, and was stirred until complete dissolution and until obtaining a crystalline solution.
   - It was filtered and the product was checked for quality control, which once approved was released for packaging.
2. Description of used equipment:
   The following pieces of equipment built with stainless steel were used:
   Mixing tank.
   Centrifugal pump
   Finished product storage tank
   Packing machines
3. Description of the conditions that were controlled during the process:
   - Dissolution temperature, which should not exceed 30°C.
   - Final density of the mixture, which must be within the adjustment parameters.
   - Viscosity of the microemulsion, which must be within the adjustment parameters.
   - Other parameters related to product quality specifications.
4. There were no reactions subsequent to the formulation process between the active ingredients, or between these and any other ingredient of the formulation or the container, as well as no process of migration of materials from the container and the product.

### Formulation example 5

1. General characterization of the process:
   - The theoretical amount of the solvent N-methylpyrrolidone was loaded into the stirring tank.
   - Under stirring, the total theoretical amount of soybean oil amino amide was loaded, and stirred until complete dissolution and until obtaining a crystalline solution.
   - Under stirring, all the water indicated in the formula was added.
   - Under stirring, the total theoretical amount of the acetic acid glacial acidulant was loaded.
   - Under stirring, the total theoretical amount of Imazapic Technical Grade was loaded and was stirred until complete dissolution and until obtaining a crystalline solution.
   - Under stirring, the total theoretical amount of fatty acid methyl esters was loaded, and mixed until homogeneity was achieved.
   - Under stirring, the total theoretical amount of ethoxylated fatty alcohol with 6 moles of EO was loaded, and mixed until homogeneity was achieved.
   - It was filtered and the product was checked for quality control, which once approved was released for packaging.
2. Description of used equipment:
   The following pieces of equipment built with stainless steel were used:
   Mixing tank.
   Centrifugal pump
   Finished product storage tank
   Packing machines
3. Description of the conditions that are controlled during the process:
   During the process the following items were controlled:
      - Dissolution temperature, which should not exceed 30°C.
      - Final density of the mixture, which must be within the adjustment parameters.
      - Viscosity of the microemulsion, which must be within the adjustment parameters.
      - Other parameters related to product quality specifications.
4. There were no reactions subsequent to the formulation process between the active ingredients, or between these and any other ingredient of the formulation or the container, as well as no process of migration of materials from the container and the product.

### Formulation example 6

1. General characterization of the process: The formulation process was carried out by batch or lots.
   - The theoretical amount of cyclohexanone solvent was loaded to the stirring tank.
   - Under stirring, the total theoretical amount of ethoxylated coconut amine with 15 moles of EO was loaded, and was stirred until complete dissolution and until obtaining a crystalline solution.
   - Under stirring, the total theoretical amount of soybean oil amino amide was loaded, and stirred until complete dissolution and until obtaining a crystalline solution.
   - Under stirring, all the water indicated in the formula was added.
   - Under stirring, the total theoretical amount of the acetic acid glacial acidulant was loaded.
   - Under stirring, the total theoretical amount of 2,4-D Technical Grade and Picloram Technical Grade was loaded, was stirred until complete dissolution and until obtaining a crystalline solution.
   - Under stirring, the total theoretical amount of fatty acid methyl esters was loaded, and mixed until homogeneity was achieved.
   - It was filtered and the product was checked for quality control, which once approved was released for packaging.
2. Description of used equipment:
   The following pieces of equipment built with stainless steel were used:
   Mixing tank.
   Centrifugal pump
   Finished product storage tank
   Packing machines
3. Description of the conditions that were controlled during the process:
   - Dissolution temperature, which should not exceed 30°C.
   - Final density of the mixture, which must be within the adjustment parameters.
   - Viscosity of the microemulsion, which must be within the adjustment parameters.
   - Other parameters related to product quality specifications.
4. There were no reactions subsequent to the formulation process between the active ingredients, or between these and any other ingredient of the formulation or the container, as well as no process of migration of materials from the container and the product.

### Formulation example 7

1. General characterization of the process: The formulation process was carried out by batch or lots.
   - The theoretical amount of cyclohexanone solvent was loaded to the stirring tank.
   - Under stirring, the total theoretical amount of ethoxylated coconut amine with 15 moles of EO was loaded, and was stirred until complete dissolution and until obtaining a crystalline solution.
   - Under stirring, the total theoretical amount of soybean oil amino amide was loaded, and stirred until complete dissolution and until obtaining a crystalline solution.
   - Under stirring, all the water indicated in the formula was added.
   - Under stirring, the total theoretical amount of Glyphosate Technical Grade was loaded and Dicamba Technical Grade, was stirred until complete dissolution and until obtaining a crystalline solution.
   - It was filtered and the product was checked for quality control, which once approved was released for packaging.
2. Description of used equipment:
   The following pieces of equipment built with stainless steel were used:
   Mixing tank.
   Centrifugal pump
   Finished product storage tank
   Packing machines
3. Description of the conditions that are controlled during the process:
   During the process the following items are controlled:
   The dissolution temperature should not exceed 30 ° C.
   Final density of the mixture that must be within the adjustment parameters.
   Viscosity of the microemulsion that must be within the adjustment parameters.
   Other parameters related to product quality specifications.
4. There were no reactions subsequent to the formulation process between the active ingredients, or between these and any other ingredient in the formulation or container, as well as no process of migration of materials of the container and the product.

The following field tests were carried out using the formulations object of this patent application, comparing them with conventional commercial products that are commonly used in the market. The results achieved demonstrate that the formulations proposed in the invention are beneficial, since the proposed objectives are achieved.

### Example 1A

OBJECTIVE: To evaluate and demonstrate the effectiveness of the herbicide Acid Imazapir 20% w/V ME in post-emergency for the control of grasses and broadleaf weeds present in a sunflower crop.

MATERIALS AND METHODS: A field trial was implemented in the town of Freyre (Vw class use floor, class II environment), Department of San Justo, Province of Córdoba during the 2015/16 campaign.

The treatments were applied on the sunflower crop (102 CL hybrid) on November 5^{th}, 2015.

The weather conditions on the fallow were good, the collected values of temperature and rainfall were above the historical average.

The experimental design was Fully Randomized Design (DCA) with 3 repetitions. The results obtained were subjected to statistical analysis using the Infostat package. The data of each treatment were compared using ANOVA (analysis of variance) by means of the Tukey test with a level of significance of (α=0.05).

Treatments applied were the following:

**Table 1**

| Treatments, Formulated products, Doses and grams/ha | | | |
|---|---|---|---|
| **Treatment** | **Formulated product** | **Doses** | **grams/ha*** |
| 1 | absolute control | 0 l/ha | 0 |
| 2 | Imazapir 20% w/V ME | 0.2 l/ha | 40 |
| 3 | Imazapir 20% w/V ME | 0.3 l/ha | 60 |
| 4 | Imazapir 20% w/V ME | 0.4 l/ha | 80 |
| 5 | Imazapir 80% w/V WG | 0.1 kg/ha | 80 |

| | | | |
|---|---|---|---|
| * Grams of active ingredient expressed as acid applied per hectare | | | |

The weed survey was carried out by going across the batch of 52 hectares in total on a biweekly basis, walking it in the form of X and making the reading in a radius of 2 meters per sample, in a total of approximately 1 sample every 10 hectares.

At the time of application an evaluation of weeds emergency per square meter was carried out and control evaluations were made 15 days after application (dda) and 30 dda.

RESULTS: The tested weeds were Conyza bonariensis, Carduus sp, Anoda cirstata, Cyperus rotundus and Cynodon Dactylon and the values obtained on them were the following:

**Table 2**

| Average emergencies/m2 for weed Conyza bonariensis for the evaluation at 0 dda, 15 dda and 30 dda. | | | |
|---|---|---|---|
| | **Conyza bonariensis** | | |
| | **Evaluations** | | |
| **Treatment** | 0 dda | 15 dda | 30 dda |
| 1 | 5 | 6 C | 9 B |
| 2 | 4 | 2 B | 2 A |
| 3 | 4 | 2 BC | 1 A |
| 4 | 4 | 1 C | 1 A |
| 5 | 4 | 1 BC | 1 A |

| | | | |
|---|---|---|---|
| Different letters indicate significant differences p<=0.05) | | | |

**Table 3:**

| Average emergencies/m2 for weed Carduus sp for the evaluation at 0 dda, 15 dda and 30 dda. | | | |
|---|---|---|---|
| | **Carduus sp** | | |
| | **Evaluations** | | |
| **Treatment** | 0 dda | 15 dda | 30 dda |
| 1 | 3 | 5 C | 6 B |
| 2 | 3 | 2 B | 2 A |
| 3 | 3 | 1 BA | 1 A |
| 4 | 3 | 0 A | 1 A |
| 5 | 3 | 0 A | 1 A |

| | | | |
|---|---|---|---|
| Different letters indicate significant differences p<=0.05) | | | |

**Table 4**

| Average emergencies/m2 for weed Carduus sp for the evaluation at 0 dda, 15 dda and 30 dda. | | | |
|---|---|---|---|
| | **Anoda cristata** | | |
| | **Evaluations** | | |
| **Treatment** | 0 dda | 15 dda | 30 dda |
| 1 | 4 | 6 C | 7 C |
| 2 | 4 | 1 B | 1 B |
| 3 | 3 | 0 A | 1 BA |
| 4 | 4 | 0 A | 0 A |
| 5 | 4 | 0 A | 0 BA |

| | | | |
|---|---|---|---|
| Different letters indicate significant differences p<=0.05) | | | |

**Table 5**

| Average emergencies/m2 for weed Cyperus rotundus for the evaluation at 0 dda, 15 dda and 30 dda. | | | |
|---|---|---|---|
| | **Cyperus rotundus** | | |
| | **Evaluations** | | |
| **Treatment** | 0 dda | 15 dda | 30 dda |
| 1 | 4 | 6 C | 7 B |
| 2 | 3 | 2 B | 1 A |
| 3 | 3 | 1 BA | 1 A |
| 4 | 4 | 0 A | 0 A |
| 5 | 3 | 0 A | 0 A |

| | | | |
|---|---|---|---|
| Different letters indicate significant differences p<=0.05) | | | |

**Table 6**

| Average emergencies/m2 for weed Cynodon Dactylon for the evaluation at 0 dda, 15 dda and 30 dda. | | | |
|---|---|---|---|
| | **Cynodon dactylon** | | |
| | **Evaluations** | | |
| **Treatment** | 0 dda | 15 dda | 30 dda |
| 1 | 3 | 6 C | 7 C |
| 2 | 2 | 1 B | 1 B |
| 3 | 3 | 1 B | 0 A |
| 4 | 3 | 0 A | 0 A |
| 5 | 2 | 0 A | 0 A |

| | | | |
|---|---|---|---|
| Different letters indicate significant differences p<=0.05) | | | |

CONCLUSIONS: In all the treatments applied a fast and correct control response was evidenced. Immediately upon application of the product, weed growth ceased causing death after 2 weeks. This behavior is consistent with the mode of action of the active ingredient.

The effective dose of development control "Acid Imazapir 20% ME", achieved a reduction of active ingredient per hectare of 25% compared to the chemical control with proven efficacy. This evidences the improvement in the performance of the "Imazapir" molecule due to the design adjuvant.

### Example 1B

OBJECTIVE: To evaluate and demonstrate the effectiveness of the herbicide Acid Imazapir 20% w/V ME in tank mix with Acid Imazapic 20% w/V ME and the possible synergistic effects between both products in post-emergence treatments for weed control in the rice cultivation.

MATERIALS AND METHODS: A field trial was implemented at the INTA Corrientes experimental station in the town of Sombrerito during the 2015/16 campaign. The type of soil on the site is the Treviño Series (Aquatic Argiudol): fine loam, mixed, very dark grayish brown color and weakly acid reaction.

Treatments were applied on rice cultivation (Puita INTA CL) on October 28^{th}, 2015.

The weather conditions were good, good soil moisture condition throughout the cycle after planting the crop.

The experimental design was a completely randomized block design (DBCA) with 4 repetitions. The results obtained were subjected to statistical analysis using the Infostat package. The data of each treatment were compared using ANOVA (analysis of variance) by means of the Tukey test with a level of significance of (α=0.05).

Treatments applied were the following:

**Table 1**

| Treatments, Formulated products, Doses and grams/ha | | |
|---|---|---|
| **Formulated product** | **Doses** | **grams/ha 1*** |
| absolute control | 0 l/ha | 0 |
| Imazapir 20% w/V ME + Imazapic 20% w/V ME | 270 cc/ha + 90 cc/ha | 54 + 18 |
| Imazapir 20% w/V ME + Imazapic 20% w/V ME | 360 cc/ha + 120 cc/ha | 72 + 24 |
| Imazapir 20% w/V ME + Imazapic 20% w/V ME | 450 cc/ha + 150 cc/ha | 90 + 30 |
| Imazapir 52.5% + Imazapic 17.5% WG) (Kifix) + Fatty alcohol alkoxylate 48% w/V SP 2* | 140 g/ha + 25 g/ha | 147 + 49 |

| | | |
|---|---|---|
| 1* Grams of the active ingredient expressed as acid applied per hectare 2 * This application was done twice, once with the application of the other herbicides and the second 2 weeks after the first application. | | |

The weed survey was carried out by means of counting a certain weed density per group of species (cyperaceae, grasses y broadleaves). It was carried out prior to application in 6 test points. Sampling was carried out in an area between two rows and 1 linear meter.

The evaluation of the efficiency of the different treatments on the weeds present was carried out at 14, 18 and 42 dda of rice. The evaluations were on 11/11/2015, 11/25/2015 and 12/09/2015.

The presence or absence of weeds in each of the plots was recorded. It does not reflect the severity of the infestation.

RESULTS: The tested weeds were Echinochloa colona, Portulaca oleracea, Cyperus iria and Setaria parviflora and the values obtained on them were the following:

**Table 2**

| Frequency of appearance after applying the formulated products. | |
|---|---|
| | **Echinochloa colona** |
| | **Evaluations** |
| **Treatment** | 48 dda |
| 1 | 100% |
| 2 | 25% |
| 3 | 0% |
| 4 | 0% |
| 5 | 0% |

**Table 3**

| Frequency of appearance after applying the formulated products. | |
|---|---|
| | **Portulaca oleracea** |
| | **Evaluations** |
| **Treatment** | 48 dda |
| 1 | 75% |
| 2 | 0% |
| 3 | 0% |
| 4 | 0% |
| 5 | 0% |

**Table 4**

| Frequency of appearance after applying the formulated products. | |
|---|---|
| | **Cyperus iria** |
| | **Evaluations** |
| **Treatment** | 48 dda |
| 1 | 75% |
| 2 | 0% |
| 3 | 0% |
| 4 | 0% |
| 5 | 0% |

**Table 5**

| Frequency of appearance after applying the formulated products. | |
|---|---|
| | **Setaria parviflora** |
| | **Evaluations** |
| **Treatment** | 48 dda |
| 1 | 50% |
| 2 | 0% |
| 3 | 0% |
| 4 | 0% |
| 5 | 0% |

**Table 6**

| Evaluation of control efficacy at 14, 28 and 42 dda for grasses, cyperaceae and broadleaves present in the plots. | | | | | | | | | |
|---|---|---|---|---|---|---|---|---|---|
| **Family** | **Grasses** | | | **Cyperaceae** | | | **Broadleaves** | | |
| **Treatment** | 14 | 28 | 42 | 14 | 28 | 42 | 14 | 28 | 42 |
| 1 | 0b | 0c | 0c | 0b | 0c | 0c | 0c | 0b | 0 b |
| 2 | 82.5a | 92.5b | 92.5b | 80a | 95b | 95b | 82.5b | 93.7a | 93.7a |
| 3 | 85a | 95a | 95a | 78.7a | 95b | 95b | 87.5ba | 95a | 95a |
| 4 | 85a | 95a | 95a | 83.7a | 95.7b | 95.7b | 90a | 95a | 95a |
| 5 | 87.5a | 95a | 95a | 82.5a | 97.2a | 97.2a | 86.2ab | 93.7a | 93.7a |

| | | | | | | | | | |
|---|---|---|---|---|---|---|---|---|---|
| Different letters indicate significant differences (p<=0.05) | | | | | | | | | |

CONCLUSIONS: For the 4 weeds evaluated the frequency of occurrence was significantly reduced with a control between 80% and 95% for groups of grasses, cyperaceae and broadleaves.

From these results we can conclude that the reduction of active ingredient per hectare for both the "Imazapic" and "Imazapir" is 50% compared to the chemical control with proven efficacy. This shows the improvement in the performance of the "Imazapic" and "Imazapir" molecules due to the use of the design adjuvant incorporated in the formula.

At the same time it is demonstrated that there is a process of synergism between both active ingredients since in the case of example 1A the reduction of active ingredient of "Imazapir" is 25% and in the case of 5A the reduction of active ingredient of "Imazapic" is 15% and when they are used in a tank mixture the reduction is 50%.

### Example 2A

OBJECTIVE: To evaluate and demonstrate the effectiveness of the herbicide Acid Picloram 5% w/V ME in post-emergency control of grasses weeds present in fallow.

MATERIALS AND METHODS: A field trial was implemented in the town of San Guillermo (IVe use class soil), Santa Fe Province during the 2013/14 campaign.

The treatments were applied on a fallow for the cultivation of late sowing corn on November 12^{th}, 2013.

The weather conditions on the fallow caused a strong hardening of the weeds due to the water stress suffered in the winter months, but in spring there was an explosive occurrence of weeds because the rainfall was above the historical average.

The experimental design was Fully Randomized Design (DCA) with 3 repetitions. The results obtained were subjected to statistical analysis using the Infostat package. The data of each treatment were compared using ANOVA (analysis of variance) by means of the Tukey test with a level of significance of (α=0.05).

Treatments applied were the following:

**Table 1**

| Treatments, Formulated products, Doses and grams/ha | | | |
|---|---|---|---|
| **Treatment** | **Formulated product** | **Doses** | **grams/ha 2*** |
| 1 | absolute control | 0 l/ha | 0 |
| 2 | Acid Picloram 5% w/V ME | 400 cc/ha | 20 |
| 3 | Acid Picloram 5% w/V ME | 500 cc/ha | 25 |
| 4 | Picloram potassium salt 27.8% w/V SL 1* | 120 cc/ha | 28.8 |

| | | | |
|---|---|---|---|
| 1* equivalent to 24% w/V of acid Picloram 2* Grams of the active ingredient expressed as acid applied per hectare | | | |

The weed survey was carried out covering the batch of 40 hectares in total on a biweekly basis, walking it in the form of X and making the reading in a radius of 2 meters per sample, in a total of approximately 1 sample every 10 hectares.

At the time of application an evaluation of weeds present per square meter was carried out and the control evaluations were made 15 days after application (dda).

RESULTS: The tested weeds were Quenopodium album, Conyza bonariensis, and Viola arvensis and the values obtained on them were the following:

**Table 2**

| Number of surviving individuals/m2 for weed Quenopodium album for the evaluation at 15 dda. | |
|---|---|
| | **Quenopodium album** |
| | **Evaluations** |
| **Treatment** | **15 dda** |
| **1** | 4.67 a |
| **2** | 2 bc |
| **3** | 0.33 c |
| **4** | 0.67 c |

| | |
|---|---|
| Different letters indicate significant differences p<=0.05) | |

**Table 3**

| Number of surviving individuals/m2 for weed Conyza bonariensis for the evaluation at 15 dda. | |
|---|---|
| | **Conyza bonariensis** |
| | **Evaluations** |
| **Treatment** | **15 dda** |
| **1** | 4.67 a |
| **2** | 1.67 bc |
| **3** | 1.33 bc |
| **4** | 2 bc |

| | |
|---|---|
| Different letters indicate significant differences p<=0.05) | |

**Table 4**

| Number of surviving individuals/m2 for weed Viola arvensis for the evaluation at 15 dda. | |
|---|---|
| | **Viola arvensis** |
| | **Evaluations** |
| **Treatment** | **15 dda** |
| **1** | 7.67 a |
| **2** | 2.67 b |
| **3** | 1 b |
| **4** | 1 b |

| | |
|---|---|
| Different letters indicate significant differences p<=0.05) | |

CONCLUSIONS: In all treatments a significant reduction in the number of individuals was observed but 100% control was never reached due to the weather conditions that generated a high hardening of weeds with a subsequent high growth due to high rainfall.

The effective dose of development control "acid Picloram 5% ME", achieved a reduction of active ingredient per hectare of 15% compared to the chemical control with proven efficacy. This shows the improvement in the performance of the "Picloram" molecule due to the design adjuvant.

### Example 2B

OBJECTIVE: To evaluate and demonstrate the efficacy of the herbicide acid Picloram 5% w/V ME in tank mix with acid 2,4-D 30% w/V ME and the possible synergistic effects between both products in post-emergency treatments for control of broadleaf weeds present in the corn crop.

MATERIALS AND METHODS: A field trial was implemented in the town of Diaz (use class III soil, type I environment), Department of San Jerónimo, Province of Santa Fe during the 2016/17 campaign.

The treatments were applied on the corn crop (DS538PW) on January 20^{th}, 2017.

The weather conditions consisted of abundant precipitations which produced a delay in the crop sowing.

The experimental design was Fully Randomized Design (DCA) with 3 repetitions. The results obtained were subjected to statistical analysis using the Infostat package. The data of each treatment were compared using ANOVA (analysis of variance) by means of the Tukey test with a level of significance of (α=0.05).

Treatments applied were the following:

**Table 1**

| Treatments, Formulated products, Doses and grams/ha | | | |
|---|---|---|---|
| **Treatment** | **Formulated product** | **Doses** | **grams/ha 3*** |
| 1 | absolute control | 0 1/ha | 0 |
| 2 | Acid Picloram 5% w/V ME + acid 2,4-D 30% w/V ME | 400 cc/ha + 250 cc/ha | 20 + 75 |
| 3 | Acid Picloram 5% w/V ME + acid 2,4-D 30% w/V ME | 500 cc/ha + 300 cc/ha | 25 + 90 |
| 4 | Acid Picloram 5% w/V ME + acid 2,4-D 30% w/V ME | 600 cc/ha + 350 cc/ha | 30 + 105 |
| 5 | Picloram potassium salt 27.8% w/V SL 1* + 2,4-D butyl ester 100% w/V EC 2* | 125 cc/ha + 240 cc/ha | 30 + 192 |

| | | | |
|---|---|---|---|
| 1* equivalent to 24% w/V of acid Picloram 2* equivalent to 80% w/V of acid Glyphosate 3* Grams of the active ingredient expressed as acid applied per hectare | | | |

The weed survey was carried out covering the batch of 30 hectares in total on a biweekly basis, walking it in the form of X and making the reading in a radius of 2 meters per sample, in a total of approximately 1 sample every 10 hectares.

At the time of application, an evaluation of weeds emergency per square meter was carried out and control evaluations were made 20 days after application (dda).

RESULTS: The tested weeds were Conyza bonariensis, Amaranthus quitensis, and Gamochaeta subfalcata and the values obtained on them were the following:

**Table 2**

| Average emergencies/m2 for weed Conyza bonariensis for the evaluation at 15 dda and 45 dda. | | |
|---|---|---|
| | **Conyza bonariensis** | |
| | **Evaluations** | |
| **Treatment** | 15 dda | 45 dda |
| 1 | 4 a | 5.67 a |
| 2 | 1.67 b | 2.67 b |
| 3 | 0.67 bc | 2 b |
| 4 | 0 c | 0.33 c |
| 5 | 0.67 bc | 1..67 bc |

| | | |
|---|---|---|
| Different letters indicate significant differences p<=0.05) | | |

**Table 3**

| Average emergencies/m2 for weeds Gamochaeta subfalcata for the evaluation at 15 dda and 45 dda. | | |
|---|---|---|
| | **Gamochaeta subfalcata** | |
| | **Evaluations** | |
| **Treatment** | 15 dda | 45 dda |
| 1 | 1 a | 2.33 a |
| 2 | 0 b | 1.67 ab |
| 3 | 0 b | 1 bc |
| 4 | 0 b | 0.33 c |
| 5 | 0 b | 1.33 abc |

| | | |
|---|---|---|
| Different letters indicate significant differences p<=0.05) | | |

**Table 4**

| Average emergencies/m2 for weed Amaranthus quitensis for the evaluation at 15 dda and 45 dda. | | |
|---|---|---|
| | **Amaranthus quitensis** | |
| | **Evaluations** | |
| **Treatment** | 15 dda | 45 dda |
| 1 | 3.67 a | 4.33 a |
| 2 | 0 b | 2.33 b |
| 3 | 0 b | 0.67 c |
| 4 | 0 b | 0 c |
| 5 | 0 b | 1 c |

| | | |
|---|---|---|
| Different letters indicate significant differences p<=0.05) | | |

CONCLUSIONS: Given the conditions in terms of weed size, quantity and the weather conditions prevailing in the test, the applied products presented a performance in accordance with the expected one. The germination of new plants was important in the last evaluation (45 dda) which demonstrates that the crop will grow free of competition for a period until it has the shading ability.

The effective dose of development control " acid Picloram 5% ME", achieved a reduction of active ingredient per hectare of 20% compared to the chemical control with proven efficacy. This shows the improvement in the performance of the "Picloram" molecule due to the design adjuvant.

In turn, the previous results show that there is a process of synergism between both active ingredients since in the case of example 2A the reduction of active ingredient of "Picloram" is 15% and when it is used in tank mix with "2, 4-D" the reduction is 20%.

### Example 3

OBJECTIVE: To evaluate and demonstrate the efficacy of the herbicide Acid Glyphosate 11% w/V ME in post-emergency control of grasses and broadleaf weeds present in fallow.

MATERIALS AND METHODS: A field trial was implemented in the town of Claromecó, Tres Arroyos District, Province of Buenos Aires during the 2016/17 campaign.

Treatments were applied on a short fallow to soy on October 10^{th}, 2016.

A 35 lb constant pressure manual backpack was used using CO2 with 11015 tablets and a water volume of 130 l/ha.

Weather conditions on the fallow were good, at the time of application the wind speed was 15 km/h, 44% of relative humidity and 11.3°C of ambient temperature.

The experimental design was a completely randomized block design (DBCA) with 3 repetitions. The results obtained were subjected to statistical analysis using the Infostat package. The data of each treatment were compared using ANOVA (analysis of variance) by means of the Tukey test with a level of significance of (α=0.05).

Treatments applied were the following:

**Table 1**

| Treatments, Formulated products, Doses and grams/ha | | | |
|---|---|---|---|
| **Treatment** | **Formulated product** | **Doses** | **grams/ha 2*** |
| 1 | absolute control | 0 l/ha | 0 |
| 2 | Acid Glyphosate 11% w/V ME | 4 l/ha | 440 |
| 3 | Acid Glyphosate 11% w/V ME | 5 l/ha | 550 |
| 4 | Acid Glyphosate 11% w/V ME | 6 l/ha | 660 |
| 5 | Acid Glyphosate 11% w/V ME | 7 l/ha | 770 |
| 6 | Glyphosate monopotassium salt 62% w/V SL 1* | 2 l/ha | 1012 |
| 7 | Glyphosate monopotassium salt 62% w/V SL 1* | 2.5 l/ha | 1265 |

| | | | |
|---|---|---|---|
| *1 equivalent to 50.6% w/V of acid Glyphosate *2 Grams of the active ingredient expressed as acid applied per hectare | | | |

Prior to the application of treatments, the degree of weed growth of the trial was determined, by estimating the coverage by weed species on the control plots.

The control effectiveness of treatments on weeds present at 7 and 35 days after application (DDA) was evaluated. The scale described below was used to evaluate and classify efficacy:

**Table 2**

| Visual evaluation system for weed control. Source: ALAM (1974) | |
|---|---|
| **Control/harm (%)** | **Detail** |
| 0 | No control: No symptoms |
| 0 - 20 | Very poor control: Very mild symptoms, stunted growth |
| 20-30 | Poor control: Chlorosis shown, growth arrest. |
| 30-50 | Insufficient control: Very obvious symptoms. Persistent chlorosis Insipient Necrosis. |
| 50-70 | Moderate control: up to 20 % necrosis in plants |
| 70-80 | Acceptable control up to 40% necrosis in large plants. |
| 80-90 | Good to very good control: 75-90 % of individuals with necrosis throughout the plant |
| 90-100 | Excellent to total control: 90-100% of individuals with necrosis throughout the plant |

RESULTS: The tested weeds were Vicia villosa and Avena sativa and the values obtained on them were the following:

**Table 3**

| % average control for weed Vicia villosa for the evaluation at 7 dda and 35 dda. | | |
|---|---|---|
| | **Vicia Villosa** | |
| | **Evaluations** | |
| **Treatment** | 7 dda | 35 dda |
| 1 | 0 a | 0 a |
| 2 | 88.3 c | 85 c |
| 3 | 93.3 de | 93.3 d |
| 4 | 97.7 e | 96.3 de |
| 5 | 97.7 e | 99 e |
| 6 | 88.3 c | 85 c |
| 7 | 91.7 cd | 88.3 c |

| | | |
|---|---|---|
| Different letters indicate significant differences p<=0.05) | | |

**Table 4**

| % average control for weed Avena sativa for the evaluation at 7 dda and 35 dda. | | |
|---|---|---|
| | **Avena sativa** | |
| | **Evaluations** | |
| **Treatment** | 7 dda | 35 dda |
| 1 | 0 a | 0 a |
| 2 | 85 bc | 85 bc |
| 3 | 93.3 d | 91.7 de |
| 4 | 94.7 d | 94.7 ef |
| 5 | 96.3 d | 96.3 f |
| 6 | 83.3 b | 83.3 b |
| 7 | 88.3 c | 88.3 cd |

| | | |
|---|---|---|
| Different letters indicate significant differences p<=0.05) | | |

CONCLUSIONS: The formulation of Acid Glyphosate 11% ME had efficient control from 7 dda and was maintained until at least 35 dda on the weeds evaluated. The dose of treatment 2 and 3 showed an equal or superior performance of the product in contrast to the doses of the commercial control. From these results we can conclude that the reduction of active ingredient per hectare results in 56% compared to the chemical control with proven efficacy. This evidences the improvement in the performance of the "Glyphosate" molecule due to the use of the design adjuvant incorporated in the formula.

### Example 4

OBJECTIVE: To evaluate and demonstrate the efficacy of the co-formulated herbicide (Acid 2,4-D 8% w/V + Acid Glyphosate 11% w/V ME) in post-emergency control of grasses and broadleaf weeds present in fallow.

MATERIALS AND METHODS: A field trial was implemented in the town of Claromecó, Tres Arroyos District, Province of Buenos Aires during the 2016/17 campaign.

Treatments were applied on a short fallow to soy on October 10^{th}, 2016.

A 35 lb constant pressure manual backpack was used using CO2 with 11015 tablets and a water volume of 130 l/ha.

Weather conditions on the fallow were good, at the time of application the wind speed was 15 km/h, 44% of relative humidity and 11.3°C of ambient temperature.

The experimental design was a completely randomized block design (DBCA) with 3 repetitions. The results obtained were subjected to statistical analysis using the Infostat package. The data of each treatment were compared using ANOVA (analysis of variance) by means of the Tukey test with a level of significance of (α=0.05).

Treatments applied were the following:

**Table 1**

| Treatments, Formulated products, Doses and grams/ha | | | |
|---|---|---|---|
| **Treatment** | **Formulated product** | **Doses** | **grams/ha 3*** |
| 1 | absolute control | 0 l/ha | 0 |
| 2 | Acid 2.4D 8% w/V + acid Glyphosate 11% w/V ME | 3.5 l/ha | 280 + 385 |
| 3 | Acid 2.4D 8% w/V + acid Glyphosate 11% w/V ME | 4 l/ha | 320 + 440 |
| 4 | acid 2.4D 8% w/V + acid Glyphosate 11% w/V ME | 4.5 l/ha | 360 + 495 |
| 5 | 2.4-D salt DMA 60% w/V SL 1* + Glyphosate 60.8% w/V SL 2* | 2.1 l/ha + 1.9 l/ha | 1050 + 912 |

| | | | |
|---|---|---|---|
| *1 equivalent to 50% w/V of acid 2,4-D *2 equivalent to 48% w/V of acid Glyphosate *3 Grams of the active ingredient expressed as acid applied per hectare | | | |

Prior to the application of treatments, the degree of weed growth of the trial was determined, by estimating the coverage by weed species on the control plots.

The control effectiveness of treatments on weeds present at 7 and 35 days after application (DDA) was evaluated. The scale described below was used to evaluate and classify efficacy:

**Table 2**

| Visual evaluation system for weed control (source: ALAM (1974) | |
|---|---|
| **Control/harm (%)** | **Detail** |
| 0 | No control: No symptoms |
| 0 - 20 | Very poor control: Very mild symptoms, stunted growth |
| 20-30 | Poor control: Chlorosis shown, growth arrest. |
| 30-50 | Insufficient control: Very obvious symptoms. Persistent chlorosis Insipient Necrosis. |
| 50-70 | Moderate control: up to 20 % necrosis in plants |
| 70-80 | Acceptable control up to 40% necrosis in large plants. |
| 80-90 | Good to very good control: 75-90 % of individuals with necrosis throughout the plant |
| 90-100 | Excellent to total control: 90-100% of individuals with necrosis throughout the plant |

RESULTS: The tested weeds were Vicia villosa y Avena sativa and the values obtained on them were the following:

**Table 3**

| % average control for weed Vicia villosa for the evaluation at 7 dda and 35 dda. | | |
|---|---|---|
| | **Vicia Villosa** | |
| | **Evaluations** | |
| **Treatment** | 7 dda | 35 dda |
| 1 | 0 a | 0 a |
| 2 | 93.3 b | 93.3 b |
| 3 | 93.3 b | 97.67 cd |
| 4 | 95 bc | 96.3 cd |
| 5 | 95 bc | 96.3 e |

| | | |
|---|---|---|
| Different letters indicate significant differences p<=0.05) | | |

**Table 4**

| % average control for weed Avena sativa for the evaluation at 7 dda and 35 dda. | | |
|---|---|---|
| | **Avena sativa** | |
| | **Evaluations** | |
| **Treatment** | 7 dda | 35 dda |
| 1 | 0 a | 0 a |
| 2 | 83.3 b | 76.6 b |
| 3 | 85 bc | 85. cde |
| 4 | 87.7 cd | 83.3 cd |
| 5 | 89.3 d | 88.3 e |

| | | |
|---|---|---|
| Different letters indicate significant differences p<=0.05) | | |

CONCLUSIONS: Given that the controls were higher than 80% in all treatments, it can be concluded that all of them are suitable for the control of VICIA and AVENA weeds. Taking into account good agricultural practices, choosing the correct dose of application would lead to choosing the dose of 3.5 to 4.5 liters per hectare of the product Acid 2.4D 8% w/V + Acid Glyphosate 11% w/V ME according to the weed pressure present in the batch.

Said doses imply a reduction of 66-73% of 2,4-D and 46-58% of Glyphosate. This shows the improvement in the performance of the "Glyphosate" and "2,4-D" molecules due to the use of the design adjuvant incorporated in the formula.

### Example 5

OBJECTIVE: To evaluate and demonstrate the effectiveness of the herbicide acid Imazapic 20% w/V ME in post-emergency for the control of grasses and broadleaf weeds present in the peanut crop.

MATERIALS AND METHODS: A field trial was implemented in the town of Rio Cuarto (loam - Sandy loam type soil), Province of Córdoba during the 2016/17 campaign.

Treatments were applied on the granoleic peanut crop on January 02^{nd}, 2017.

The weather conditions were good at 27.6°C, relative humidity 73%, wind speed 13.8 km/h, wind direction N-NE and the time was 06:30 pm.

The experimental design was a completely randomized block design (DBCA) with 4 repetitions. The results obtained were submitted to statistical analysis using the Infostat package. The data of each treatment were compared using ANOVA (analysis of variance) by means of the Tukey test with a level of significance of (α=0.05).

Treatments applied were the following:

**Table 1**

| Treatments, Formulated products, Doses and grams/ha | | | |
|---|---|---|---|
| **Treatment** | **Formulated product** | **Doses** | **grams/ha 1*** |
| 1 | absolute control | 0 l/ha | 0 |
| 2 | Imazapic 20% w/V ME | 150 cc/ha | 30 |
| 3 | Imazapic 20% w/V ME | 200 cc/ha | 40 |
| 4 | Imazapic 20% w/V ME | 250 cc/ha | 50 |
| 5 | Imazapic 70% w/V WP | 85 g/ha | 59.4 |

| | | | |
|---|---|---|---|
| * Grams of the active ingredient expressed as acid applied per hectare | | | |

Prior to the application of treatments, the degree of weed growth of the trial was determined, by estimating the coverage by weed species on the control plots.

The control effectiveness of treatments on weeds present at 7, 21, 35 and 56 days after application (DDA) was evaluated. The scale described below was used to evaluate and classify efficacy:

**Table 2**

| Visual evaluation system for weed control (source: ALAM (1974) | | |
|---|---|---|
| **N°** | **Control/harm (%)** | **Control** |
| 1 | 0 - 40 | None to poor |
| 2 | 41 - 60 | Regular |
| 3 | 61 - 70 | Sufficient |
| 4 | 71 - 80 | Good |
| 5 | 81 - 90 | Very good |
| 6 | 91 - 100 | Excellent |

RESULTS: The tested weeds were Conyza bonariensis, Cyperus rotundus and Eleusine indica and the values obtained on them were the following:

**Table 3**

| ALAM scale value for the percentage of control of Conyza bonariensis, Cyperus rotundus and Eleusine indica for the evaluation at 7, 21, 35 and 56 dda. | | | | |
|---|---|---|---|---|
| | **Conyza bonariensis, Cyperus rotundus, Eleusine indica** | | | |
| | **Evaluations** | | | |
| **Treatment** | 7 dda | 21 dda | 35 dda | 56 dda |
| 1 | 0 | 0 | 0 | 0 |
| 2 | 2a | 3.25 b | 3.5 b | 3.38 b |
| 3 | 2.5 a | 3.63 ab | 3.38 b | 3.25 b |
| 4 | 2.5 a | 4.25 a | 4.5 a | 5.0 a |
| 5 | 2a | 3.6 ab | 4.63 a | 4.5 a |

| | | | | |
|---|---|---|---|---|
| Different letters indicate significant differences p<=0.05) | | | | |

CONCLUSIONS: The products presented a very similar control and without significant differences for the first evaluation, then the response was dependent on the dose of products applied, achieving good to very good controls for treatments 4 and 5.

From these results it can be concluded that the reduction of active ingredient per hectare results in 15% Imazapic compared to the chemical control with proven efficacy. The above shows the improvement in the performance of the "Imazapic" molecule due to the use of the design adjuvant incorporated in the formula.

### Example 6

OBJECTIVE: To evaluate and demonstrate the efficacy of the co-formulated herbicide (Acid 2,4-D 15% w / V + Acid Picloram 5% w / V ME) in post-emergency for the control of grasses and broadleaf weeds present in fallow.

MATERIALS AND METHODS: A field trial was implemented in the town of Adolfo Gonzalez Chavez, Adolfo Gonzalez Chavez District, Province of Buenos Aires during the 2016/17 campaign.

Treatments were applied on a short fallow to soy on March 14^{th}, 2016.

A 35 lb. constant pressure manual backpack was used using CO2 with 11002 tablets and a water volume of 140 l/ha.

The weather conditions on the fallow were very good.

The experimental design was a completely randomized block design (DBCA) with 3 repetitions. The results obtained were subjected to statistical analysis using the Infostat package. The data of each treatment were compared using ANOVA (analysis of variance) by means of the Tukey test with a level of significance of (α=0.05).

Treatments applied were the following:

**Table 1**

| Treatments, Formulated products, Doses and grams/ha | | | |
|---|---|---|---|
| **Treatment** | **Formulated product** | **Doses** | **grams/ha 2*** |
| 1 | absolute control | 0 l/ha | 0 |
| 2 | Acid 2,4D 15% w/V + Picloram 5% w/V ME | 0.4 l/ha | 60 + 20 |
| 3 | Acid 2,4D 15% w/V + Picloram 5% w/V ME | 0.5 l/ha | 75 + 25 |
| 4 | Acid 2,4D 15% w/V + Picloram 5% w/V ME | 0.6 l/ha | 90 + 30 |
| 5 | 2,4-D triisopropanolamine salt 44.8% w/V SL 1* + Picloram triisopropanolamine salt 11.5% w/V SL 1* | 0.5 l/ha | 120 + 32 |

| | | | |
|---|---|---|---|
| 1* equivalent to 24% w/V of acid 2,4-D + equivalent to 6.4% w/V of acid Picloram 2* Grams of active ingredient expressed as acid applied per hectare. | | | |

Prior to the application of treatments, the degree of weed growth of the trial was determined, by estimating the coverage by weed species on the control plots.

The control effectiveness of treatments on weeds present at 7 and 35 days after application (DDA) was evaluated. The scale described below was used to evaluate and classify efficacy:

**Table 2**

| Visual evaluation system for weed control. Source: ALAM (1974) | |
|---|---|
| **Control/harm** (%) | **Detail** |
| 0 | No control: No symptoms |
| 0 - 20 | Very poor control: Very mild symptoms, stunted growth |
| 20-30 | Poor control: Chlorosis shown, growth arrest. |
| 30-50 | Insufficient control: Very obvious symptoms. Persistent chlorosis Insipient Necrosis. |
| 50-70 | Moderate control: up to 20 % necrosis in plants |
| 70-80 | Acceptable control up to 40% necrosis in large plants. |
| 80-90 | Good to very good control: 75-90 % of individuals with necrosis throughout the plant |
| 90-100 | Excellent to total control: 90-100% of individuals with necrosis throughout the plant |

RESULTS: The tested weeds were Diplotaxis tenuifolia and Euphorbia dentata and the values obtained on them were the following:

**Table 3**

| % average control for weed Diplotaxis tenuifolia for evaluation at 15 dda and 47 dda. | | |
|---|---|---|
| | **Diplotaxis tenuifolia** | |
| | **Evaluations** | |
| **Treatment** | 15 dda | 47 dda |
| 1 | 0 a | 0 a |
| 2 | 63.3 b | 73.3 b |
| 3 | 67.7 bc | 81.7 bc |
| 4 | 69.3 c | 88.3 c |
| 5 | 63.3 b | 78.3 bc |

| | | |
|---|---|---|
| Different letters indicate significant differences (p<=0.05) | | |

**Table 4**

| % average control for weed Euphorbia dentata for evaluation at 15 dda and 47 dda. | | |
|---|---|---|
| | **Euphorbia dentata** | |
| | **Evaluations** | |
| **Treatment** | 15 dda | 47 dda |
| 1 | 0 a | 0 a |
| 2 | 67.7 b | 80.7 bc |
| 3 | 73.3 c | 85.0 cd |
| 4 | 83.3 d | 90.0 d |
| 5 | 75.0 c | 78.3 b |

| | | |
|---|---|---|
| Different letters indicate significant differences (p<=0.05) | | |

CONCLUSIONS: Although the weeds were greatly developed, controls were very good. Treatments 3 and 4 were the best and exceeded or matched the chemical control.

These doses imply a 33-40% reduction of 2,4-D and 6-28% of Picloram. This shows the improvement in the performance of the "2,4-D" and "Picloram" molecules due to the use of the design adjuvant incorporated in the formula.

### Example 7

OBJECTIVE: To evaluate and demonstrate the efficacy of the co-formulated herbicide (Acid Dicamba 2.5% w/V + Acid Glyphosate 11.5% w/V ME) for the control of grasses and broadleaf weeds present in fallow.

MATERIALS AND METHODS: A field trial was implemented in the town of Balcarce (Soil with a percentage of MO 4.7%, good availability of phosphorus and nitrogen, ph 5.8), Balcarce District, Province of Buenos Aires (37 ° 53'48.5 "S58 ° 18'40.3" W) during the 2017/18 campaign.

The treatments were applied on a short fallow to soy on December 20^{th}, 2017.

A manual backpack with a constant pressure of 2 bars was used using CO₂ with 11015 tablets and a water volume of 120 l/ha.

The weather conditions on the fallow were good, at the time of application the wind speed was 6 km/h, 40% relative humidity and ambient temperature of 30 ° C.

The experimental design was a completely randomized block design (DBCA) with 4 repetitions. The results obtained were subjected to statistical analysis using the Infostat package. The data of each treatment were compared using ANOVA (analysis of variance) by means of the Tukey test with a level of significance of (α=0.05).

Treatments applied were the following:

**Table 1**

| Treatments, Formulated products, Doses and grams/ha | | | |
|---|---|---|---|
| **Treatment** | **Formulated product** | **Doses** | **grams/ha 3*** |
| 1 | absolute control | 0 l/ha | 0 |
| 2 | Acid Dicamba 2.5% w/V + Acid Glyphosate 11.5% w/V ME | 2 l/ha | 50 + 230 |
| 3 | Acid Dicamba 2.5% w/V + Acid Glyphosate 11.5% w/V ME | 2.5 l/ha | 62.5 + 287 |
| 4 | Acid Dicamba 2.5% w/V + Acid Glyphosate 11.5% w/V ME | 3 l/ha | 75 + 345 |
| 5 | Dicamba dimethylamine salt 57.8% w/V SL 1* + 2 1/ha Glyphosate potassium salt 60.8% w/V SL 2* | 0.2 l/ha + 2 l/ha | 96 + 960 |

| | | | |
|---|---|---|---|
| *1 equivalent to 48% w/V of acid Dicamba *2 equivalent to 48% w/V of Acid Glyphosate *3 Grams of the active ingredient expressed as acid applied per hectare | | | |

Prior to the application of treatments, the degree of weed growth of the trial was determined, by estimating the coverage by weed species on the control plots.

Control effectiveness of treatments on weeds present at 7 14 and 28 days after application (DDA) was evaluated. The scale described below was used to evaluate and classify efficacy:

**Table 2**

| Visual evaluation system for weed control (source: ALAM (1974) | |
|---|---|
| **Control/harm (%)** | **Detail** |
| 0 | No control: No symptoms |
| 0 - 20 | Very poor control: Very mild symptoms, stunted growth |
| 20 - 30 | Poor control: Chlorosis shown, growth arrest. |
| 30 - 50 | Insufficient control: Very obvious symptoms. Persistent chlorosis Insipient Necrosis. |
| 50 - 70 | Moderate control: up to 20 % necrosis in plants |
| 70 - 80 | Acceptable control up to 40% necrosis in large plants. |
| 80 - 90 | Good to very good control: 75-90 % of individuals with necrosis throughout the plant |
| 90 - 100 | Excellent to total control: 90-100% of individuals with necrosis throughout the plant |

RESULTS: The tested weeds were Chenopodium álbum, Xanthiumspinosum, Digitaria sanguinalis and Portulaca oleracea, and the values obtained on them were the following:

**Table 3**

| % average control for weed Chenopodium álbum for the evaluation at 7 dda, 14 dda and 28 dda. | | | |
|---|---|---|---|
| | **Chenopodium album** | | |
| | **Evaluations** | | |
| **Treatment** | 7 dda | 14 dda | 28 dda |
| 1 | 0 d | 0 c | 0 c |
| 2 | 82.5 c | 87.5 b | 89.25 b |
| 3 | 88.75 bc | 95 a | 96.25 ba |
| 4 | 95 ba | 97.5 a | 100 a |
| 5 | 97.5 a | 98.75 a | 100 a |

| | | | |
|---|---|---|---|
| Different letters indicate significant differences p<=0.05) | | | |

**Table 4**

| % average control for weed Xanthium spinosum for the evaluation at 7 dda, 14 dda and 28 dda. | | | |
|---|---|---|---|
| | **Xanthiumspinosum** | | |
| | **Evaluations** | | |
| **Treatment** | 7 dda | 14 dda | 28 dda |
| 1 | 0 c | 0 c | 0 d |
| 2 | 91.25 b | 92.5 b | 91.75 c |
| 3 | 91.25 b | 92.5 b | 95.5 b |
| 4 | 95 ba | 92.5 b | 97.25 ba |
| 5 | 100 a | 100 a | 99.25 a |

| | | | |
|---|---|---|---|
| Different letters indicate significant differences p<=0.05) | | | |

**Table 5**

| % average control for weed Digitaria sanguinalis for the evaluation at 7 dda, 14 dda and 28 dda. | | | |
|---|---|---|---|
| | **Digitaria sanguinalis** | | |
| | **Evaluations** | | |
| **Treatment** | 7 dda | 14 dda | 28 dda |
| 1 | 0 d | 0 c | 0 c |
| 2 | 93.75 c | 95.5 b | 86.75 b |
| 3 | 95 cb | 95.5 b | 88.75 b |
| 4 | 97.5 ba | 97.5 b | 91.5 ba |
| 5 | 100 a | 100 a | 95.25 a |

| | | | |
|---|---|---|---|
| Different letters indicate significant differences p<=0.05) | | | |

**Table 6**

| % average control for weed Portulaca oleracea for the evaluation at 7 dda, 14 dda and 28 dda. | | | |
|---|---|---|---|
| | **Portulaca oleracea** | | |
| | **Evaluations** | | |
| **Treatment** | 7 dda | 14 dda | 28 dda |
| 1 | 0 c | 0 d | 0 c |
| 2 | 72.5 b | 77.5 c | 82.5 b |
| 3 | 72.5 b | 85 cb | 84.25 b |
| 4 | 85 ba | 91.25 b | 92.5 ba |
| 5 | 78.75 a | 81.25 a | 86.25 a |

| | | | |
|---|---|---|---|
| Different letters indicate significant differences p<=0.05) | | | |

CONCLUSIONS: From the previous results it is concluded that the reduction of active ingredient per hectare results in 35% of "Dicamba" and 70% of "Glyphosate" compared to the chemical control with proven efficacy. The above evidences the improvement in the performance of the "Dicamba" and "Glyphosate" molecules due to the use of the design adjuvant incorporated in the formula.

## Claims

1. A herbicidal formulation having greater agronomic efficiency in the form of microemulsion, which allows a lower use of active substance per hectare thus generating less environmental impact, the active substance being in its acid form and not being chemically modified for it to be solubilized in the water of the broth of application, having synergies of effectiveness in tank mixtures with other active ingredients, **characterized in that** it comprises:
at least one active ingredient selected from Glyphosate at a concentration of between 5 to 15% w/V, Imazapir at a concentration of between 5-30% w/V, Imazapic at a concentration of between 5-30% w/V, Picloram at a concentration of between 2-10% w/V, and mixtures of active substances consisting of 5-15% w/V of Glyphosate and 2-10% w/V of 2,4-dichlorophenoxyacetic acid, between 5-15% w/V of Glyphosate and 2-10% w/V of Dicamba, and between 2-10% w/V of Picloram and 5-20% w/V of 2,4-dichlorophenoxyacetic acid,
at least four (4) of the following surfactant/solvents:
| | |
|---|---|
| soybean oil amino amide | 10-40% |
| ethoxylated coconut fatty amine | 5- 15% |
| methyl ester of fatty acids (Biodiesel) | 4- 15% |
| cyclohexanone | 2- 21% |
| N-methyl pyrrolidone | 2- 40% |
| Ethoxylated fatty alcohols | 2- 12% |
| Water | 5- 40%, |
the surfactant comprising ethoxylated fatty alcohols when the active ingredient is selected from said Imazapir, Imazapic and Picloram, and at least one acidulant that is glacial acetic acid when the active ingredient is selected from Imazapir, Imazapic, Picloram, and the mixture of Picloram and 2,4-diclorophenoxyacetic, all percentages being expressed in % w/V with respect to the total formulation.

2. A herbicidal formulation according to claim 1, **characterized in that** it comprises acid Glyphosate at a concentration of 11% w/V in microemulsion, in acid form, and an adjuvant/solvent/surfactant comprising:
21% w/V of cyclohexanone,
19% w/v of soybean oil amino amide,
14.0% w/V of ethoxylated coconut amine with 15 moles of EO,
4.5% w/V of Biodiesel, and
32.5% w/V water.

3. A herbicidal formulation according to claim 1, **characterized in that** it comprises Imazapir at a concentration of 20% w/V in microemulsion, in acid form, and an adjuvant/solvent/surfactant comprising:
19% w/V of soybean oil amino amide,
7.0% w/V of Biodiesel,
33.0% w/V of N-methyl pyrrolidone,
11.0% w/V of ethoxylated fatty alcohol with 6 moles of EO, and
8.0 % w/V of water,
wherein the formulation also includes 8.0% w/V of glacial acetic acid as acidulant.

4. A herbicidal formulation according to claim 1, **characterized in that** it comprises Imazapic at a concentration of 20% w/V in microemulsion, in acid form, and an adjuvant/solvent/surfactant comprising:
20% w/V of soybean oil amino amide,
7.0% w/V of Biodiesel,
36.0% w/V of N-methyl pyrrolidone,
12.0% w/V of ethoxylated fatty alcohol with 6 moles of EO, and
2.5% w/V of water,
wherein the formulation also includes 8.0% w/V of glacial acetic acid as acidulant.

5. A herbicidal formulation according to claim 1, **characterized in that** it comprises Picloram at a concentration of 5% w/V in microemulsion, in acid form, and an adjuvant/solvent/surfactant comprising:
26% w/V of soybean oil amino amide,
15.0% w/V of Biodiesel,
28.0% w/V of N-methyl pyrrolidone,
9.0% w/V of ethoxylated fatty alcohol with 6 moles of EO, and
4.0% w/V of water,
wherein the formulation also includes 13.0% w/V of glacial acetic acid as acidulant.

6. A herbicidal formulation according to claim 1, **characterized in that** it comprises a mixture of active substances consisting of 1% w/V Glyphosate and 8% w/V 2,4-dichlorophenoxyacetic acid, in microemulsion, in acid form, and an adjuvant/solvent/surfactant comprising:
21% w/V of cyclohexanone,
21.0% w/V of soybean oil amino amide,
16.0% w/V of ethoxylated coconut fatty amine with 15 moles of EO, and 38.0% w/V of water.

7. A herbicidal formulation according to claim 1, **characterized in that** it comprises 12.0% w/V Glyphosate and 2.5% w/V Dicamba, in microemulsion, in acid form, and an adjuvant/solvent/surfactant comprising:
16% w/V of cyclohexanone,
24.0% w/V of soybean oil amino amide,
17.5% w/V of ethoxylated coconut amine with 15 moles of EO, and
35.5% w/V of water.

8. A herbicidal formulation according to claim 1, **characterized in that** it comprises 15.0 % w/V 2,4-dichlorophenoxyacetic acid and 2.5% w/V Picloram, in microemulsion, y in acid form, and an adjuvant/solvent/surfactant comprising:
8.0% w/V of cyclohexanone,
30.0% w/V of soybean oil amino amide,
12.0% w/V of ethoxylated coconut amine with 15 moles of EO,
7.0% w/V of Biodiesel, and
26.0% w/V of water,
wherein the formulation also includes 4.0% w/V of glacial acetic acid as acidulant.

9. A mixture of herbicidal formulations with synergistic effect according to claims 3 and 4, **characterized in that** it comprises Acid Imazapir 20% w/V in microemulsion in tank mix with acid Imazapic 20% w/V in microemulsion.

10. A mixture of herbicidal formulations with synergistic effect according to claim 5, **characterized in that** it comprises acid Picloram 5% w/V in microemulsion in tank mix with acid 2,4-D 30% w/V in microemulsion.
